# EUROPÄISCHE PATENTANMELDUNG

(11) **EP 2 508 691 A2**
(43) Veröffentlichungstag der Anmeldung: **10.10.2012**
(21) Anmeldenummer: 12401047.1
(22) Anmeldetag: 26.03.2012
(51) Int. Cl.: E04F 13/08

(54) **Spreizdübel mit einer Spreizschraube**

(30) Priorität: 08.04.2011 DE 102011001897
(71) Anmelder: fischerwerke GmbH & Co. KG, 72178 Waldachtal (DE)
(72) Erfinder: Renz, Jürgen, 72202 Nagold (DE)

(57) **Zusammenfassung**

Die Erfindung betrifft einen Spreizdübel (1), insbesondere einen Dämmstoffhalter mit einem Halteteller (8), mit einer Spreizschraube (9). Die Erfindung schlägt ein Rohr oder ein anderes Hohlprofil als Metallschaft (10) der Spreizschraube (9) vor, dessen Enden mit einem Schraubengewinde (11) und einem Schraubenkopf (7) aus Kunststoff umspritzt sind. Eine Kältebrücke wird vermieden und trotzdem eine hohe Torsionssteifigkeit der Spreizschraube (9) erzielt.

## Beschreibung

Die Erfindung betrifft einen Spreizdübel mit einer Spreizschraube mit den Merkmalen des Oberbegriffs des Anspruchs 1.

Spreizdübel weisen einen Spreizbereich auf, der durch Eindrehen einer Spreizschraube aufspreizbar ist, um den Spreizdübel in einem Bohrloch zu verankern, d.h. zu befestigen. Der Spreizbereich ist meist durch einen oder mehrere Längsschlitze gebildet, die den Spreizdübel im Spreizbereich in Spreizschenkel unterteilen, die durch Einschrauben der Spreizschraube auseinander gedrückt, d.h. aufgespreizt werden. Unter einem Bohrloch ist hier ein insbesondere zumindest näherungsweise zylindrisches Loch unabhängig davon zu verstehen, ob es durch Bohren oder in anderer Weise hergestellt oder entstanden ist.

Die Patentschrift DE 198 01 548 C1 offenbart einen Spreizdübel mit einer Spreizschraube, wobei der Spreizdübel ein sog. Dämmstoffhalter zur Befestigung von Dämmstoffplatten oder dgl. an beispielsweise Gebäudewänden, also zur Befestigung an sog. Wärmedämmverbundsystemen (WDVS), ist. Der bekannte Spreizdübel weist einen Spreizbereich an einem Ende auf, an den sich ein Hohlschaft anschließt, der sich an einem anderen Ende des Spreizdübels zur Aufnahme eines Schraubenkopfs der Spreizschraube erweitert. An dem dem Spreizbereich fernen Ende weist der bekannte Spreizdübel einen Halteteller auf, der auch als Druckplatte bezeichnet wird, und der in gesetztem Zustand eine Außenseite des Dämmstoffs übergreift, um den Dämmstoff an beispielsweise der Gebäudewand zu halten.

Die Spreizschraube des bekannten Spreizdübels weist ein Schraubengewinde an einem Ende eines Schraubenschafts auf, das mit dem Schraubenschaft einstückig ist und wie dieser aus Metall besteht. Ein dem Schraubengewinde fernes Ende ist zur thermischen Isolierung bzw. zur Vermeidung einer Kältebrücke mit einem Schraubenkopf aus Kunststoff umspritzt, der den Schraubenschaft ein Stück verlängert.

Aufgabe der Erfindung ist, eine thermische Isolierwirkung einer Spreizschraube eines Spreizdübels zu verbessern, wobei die Spreizschraube ein hohes Drehmoment vom Schraubenkopf auf ein Schraubengewinde übertragen können und eine hohe Torsionssteifigkeit aufweisen soll.

Diese Aufgabe wird erfindungsgemäß durch die Merkmale des Anspruchs 1 gelöst. Die Spreizschraube des erfindungsgemäßen Spreizdübels weist einen Metallschaft auf, der einen Schraubenkopf aus Kunststoff mit einem Schraubengewinde, das ebenfalls aus Kunststoff besteht, verbindet. Der Metallschaft verleiht der Spreizschraube eine hohe Torsionssteifigkeit und ermöglicht die Übertragung eines hohen Drehmoments vom Schraubenkopf auf das Schraubengewinde. Das Schraubengewinde auf Kunststoff isoliert die Spreizschraube zusätzlich zu dem ebenfalls aus Kunststoff bestehenden Schraubenkopf. Das Schraubengewinde aus Kunststoff verringert zusätzlich zum Schraubenkopf aus Kunststoff eine thermische Leitfähigkeit der Spreizschraube und erhöht ihre thermische Isolierwirkung, eine Kältebrücke durch die Spreizschraube wird vermieden. Der Kunststoff ermöglicht eine freie Gestaltung des Schraubengewindes.

Der erfindungsgemäße Spreizdübel muss kein Dämmstoffhalter zur Befestigung von Isolierplatten oder dgl., sondern kann ein an sich beliebiger Spreizdübel sein. Die an sich vorgesehene Verwendung des erfindungsgemäßen Spreizdübels ist allerdings die Befestigung von Isolierplatten oder dgl., also von Wärmedämmverbundsystemen (WDVS) an beispielsweise Gebäudewänden, weswegen eine Ausgestaltung einen Halteteller an einem Ende des Spreizdübels vorsieht.

Eine bevorzugte Ausgestaltung der Erfindung sieht ein Profil oder ein Hohlprofil aus Metall als Metallschaft vor. Die Ausbildung des Metallschafts als Profil oder Hohlprofil ermöglicht eine kleine Querschnittsfläche, wodurch sich eine Wärmeleitung verringert. Bevorzugt wird ein Profil oder Hohlprofil mit hoher Torsionssteifigkeit, also beispielsweise ein L-, Kreuz-, T-, Doppel-T-, C- oder U-Profil, wobei ein C- und U-Profil als Hohlprofile angesehen werden können. Als Hohlprofil kommt insbesondere ein rohrförmiger Metallschaft der Spreizschraube in Frage, wobei der rohrförmige Metallschaft in Umfangsrichtung geschlossen oder an einer Umfangsstelle offen und nicht nur rund, sondern beispielsweise auch eckig sein kann. Vorzugsweise ist der Metallschaft als geschlitztes Hohlprofil ausgebildet.

Vorzugsweise wird der Metallschaft aus einem Blech gebogen. Insbesondere die Herstellung eines C- oder U-förmigen, rohrartigen Hohlprofils ist durch Biegen eines Blechstreifens in die gewünschte Form auf einfache und kostengünstige Weise möglich.

Eine Ausgestaltung der Erfindung sieht eine Herstellung des Schraubengewindes und/oder des Schraubenkopfs und Anbringung des Schraubengewindes und/oder des Schraubenkopfs am Metallschaft durch Urformen, beispielsweise durch Umspritzen des Metallschafts mit dem Schraubengewinde und/oder dem Schraubenkopf aus Kunststoff vor. Das ermöglicht eine schnelle und preisgünstige Herstellung. Außerdem bildet der Metallschaft einen steifen und stabilen Träger für den ihn ummantelnden oder einbettenden Kunststoff, der das Schraubengewinde und/oder den Schraubenkopf bildet.

Zur Herstellung der Spreizschraube des erfindungsgemäßen Spreizdübels wird der in einer Spritzgussform einliegende Metallschaft mit Kunststoff umspritzt, derart, dass sich der Schraubenkopf und das Schraubengewinde ausbildet. Ist der Metallschaft beispielsweise ein L- oder T-Profil, so wird er mit dem Kunststoff in bekannter Weise umspritzt. Ist der Metallschaft, wie dies bevorzugt ist, aus einem Blechstreifen zu einem C- oder U-förmigen, rohrartigen Hohlprofil gebogen, so wird der Kunststoff insbesondere an einem Ende des rohrartigen Hohlprofils, beispielsweise an dem Ende, an dem das Schraubengewinde ausgebildet werden soll, in das Hohlprofil eingespritzt, so dass der Kunststoff das Hohlprofil durchfließt und an dem gegenüberliegenden Ende den Schraubenkopf bildet. Dabei wird der Metallschaft mit Kunststoff ausgefüllt und zudem das Schraubengewinde hergestellt. Durch das Ausfüllen des Metallschafts mit Kunststoff wird die Festigkeit des Metallschafts, insbesondere die Torsionsfestigkeit erheblich gesteigert, so dass der Metallschaft ein hohes Drehmoment übertragen kann.

Um ein hohes Drehmoment vom Schraubenkopf auf den Metallschaft der Spreizschraube und/oder vom Metallschaft auf das Schraubengewinde übertragen zu können, sieht eine Ausgestaltung der Erfindung ein Drehsicherungsprofil des Metallschafts vor, das das Schraubengewinde und/oder den Schraubenkopf durch Formschluss drehfest hält. Ein zusätzlicher Kraft- oder Stoffschluss sind nicht ausgeschlossen. Außer den oben genannten Profilen ist beispielsweise ein Mehrkant-oder ein Wellenprofil als Drehsicherungsprofil möglich. Bei einem kreisrohrförmigen Metallschaft, wie er bei einem geschlossenen Rohr oder einem C- oder U-förmigen, rohrartigen Hohlprofil vorhanden ist, weist dieser im Bereich des Schraubengewindes und/oder des Schraubenkopfs das Drehsicherungsprofil auf. Das Drehsicherungsprofil kann durch Umformen des Metallschafts hergestellt werden, wobei bei einem Hohlprofil auch Öffnungen, in die Kunststoff eindringen kann, ein Drehsicherungsprofil darstellen. Das Drehsicherungsprofil kann zudem auch im Bereich zwischen dem Schraubenkopf und dem Schraubengewinde vorhanden sein, um den Verbund zwischen Metallschaft und Kunststoff auch in diesem Bereich zu verbessern.

In bevorzugter Ausgestaltung dichtet der Schraubenkopf den Spreizdübel ab, wenn die Spreizschraube in den Spreizdübel eingeschraubt ist. Dadurch wird ein Eindringen von Feuchtigkeit durch den Spreizdübel zum einen an den Metallschaft der Spreizschraube und zum anderen in die Isolierplatte oder dgl. und die Gebäudewand verhindert. Zur Abdichtung kann der Schraubenkopf kongruent zu einer Aufnahme an einem Ende eines Hohlschafts des Spreizdübels ausgebildet sein, so dass der Schraubenkopf abdichtend in der Aufnahme des Spreizdübels einliegt. Auch sind ein oder mehrere umlaufende Rippen am Schraubenkopf, die abdichtend am Spreizdübel anliegen und/oder eine oder mehrere Ringschultern am Schraubenkopf, die abdichtend an korrespondierenden Ringschultern im Spreizdübel anliegen, zur Abdichtung des Spreizdübels mit dem Schraubenkopf der Spreizschraube möglich. Es können verschiedene Abdichtungsmöglichkeiten kombiniert sein. Die Aufzählung ist nicht abschließend.

Zur thermischen Isolierung bzw. zur Vermeidung einer Kältebrücke besteht der Spreizdübel insbesondere aus Kunststoff. Er weist bei einer Ausgestaltung der Erfindung einen Spreizbereich und einen Hohlschaft auf, wobei der Hohlschaft länger als der Spreizbereich ist.

Die Erfindung wird nachfolgend anhand in der Zeichnung dargestellter Ausführungsbeispiele näher erläutert. Es zeigen:
- Figur 1: einen Spreizdübel mit einer Spreizschraube gemäß der Erfindung;
- Figur 2: einen Metallschaft der Spreizschraube aus Figur 1; und
- Figuren 3-5: Ausführungsbeispiele von Spreizschrauben für Spreizdübel gemäß der Erfindung.

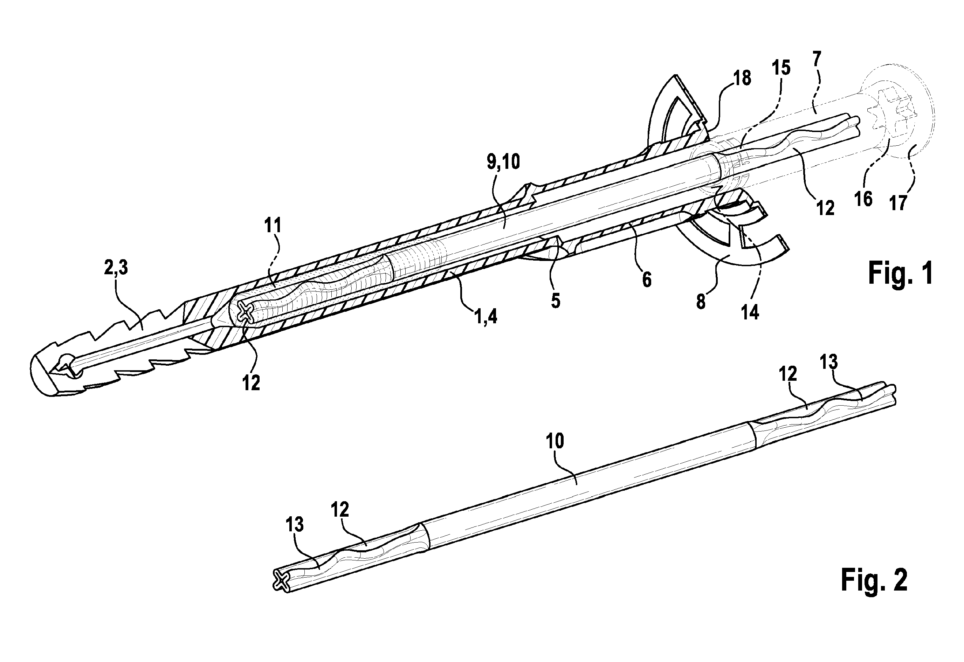

Der in Figur 1 dargestellte, erfindungsgemäß Spreizdübel 1 ist ein sog. Dämmstoffhalter, er dient zur Befestigung von Dämmstoffplatten oder dgl., d.h. zur Befestigung von Wärmedämmverbundsystemen (WDVS) an beispielsweise Gebäudewänden. Der Spreizdübel 1 weist einen Spreizbereich 2 auf, in dem der Spreizdübel 1 durch einen ihn quer durchsetzenden Schlitz in einer Axialebene in zwei Spreizschenkel 3 unterteilt ist. An den Spreizbereich 2 schließt sich ein Hohlschaft 4 an, der sich mit einer Ringstufe 5 zu einer rohrförmigen Aufnahme 6 für einen Schraubenkopf 7 aufweitet. An einem dem Spreizbereich 2 fernen Ende weist der Spreizdübel 1 einen Halteteller 8 auf. Der Spreizdübel 1, d.h. der Spreizbereich 2, der Hohlschaft 4, die Aufnahme 6 und der Halteteller 8 sind einstückig durch Spritzgießen aus Kunststoff hergestellt. Der Hohlschaft 4 vom Spreizbereich 2 bis zur Ringstufe 5 ist lang, im Ausführungsbeispiel ist er ungefähr doppelt so lang wie der Spreizbereich 2. Als Spreizdübel 1 ist ein Dämmstoffhalter mit einem Halteteller 8 nicht zwingend für die Erfindung, es sind auch andere Spreizdübel möglich (nicht dargestellt).

Im Spreizdübel 1 liegt eine Spreizschraube 9 ein, die einen Metallschaft 10, ein Schraubengewinde 11 aus Kunststoff und den Schraubenkopf 7, der ebenfalls aus Kunststoff besteht, aufweist. Der Schraubenkopf 7 und das Schraubengewinde 11 sind durchsichtig gezeichnet, um im Schraubenkopf 7 und im Schraubengewinde 11 befindliche Enden des Metallschafts 10 mit Kreuzprofilen 12 sichtbar zu machen. Der Metallschaft 10 ist als Einzelteil in Figur 2 dargestellt. Er besteht aus einem Stahlrohr, weist also ein Hohlprofil auf, das an beiden Enden zu dem Kreuzprofil 12 umgeformt ist. Die Kreuzprofile 12 sind gleich lang, so dass der Metallschaft 10 symmetrisch ist und nicht verkehrt herum verwendet werden kann. Die Symmetrie des Metallschafts 10 vermeidet, dass das für den Schraubenkopf 7 bestimmte Kreuzprofil 12 sich im Schraubengewinde 11 befindet und umgekehrt, weil beide Kreuzprofile 12 gleich und nicht eines für den Schraubenkopf 7 und das andere für das Schraubengewinde 11 bestimmt ist. Beide Kreuzprofile 12 erstrecken sich im Ausführungsbeispiel über etwa ein Viertel bis ein Fünftel einer Länge des Metallschafts 10, wobei andere Längenverhältnisse möglich sind. Die beiden Kreuzprofile 12 bilden Drehsicherungsprofile, die das Schraubengewinde 11 und den Schraubenkopf 7 durch Formschluss drehfest auf dem Metallschaft 10 halten. Rippen 13 der Kreuzprofile 12 verlaufen in Längsrichtung wellenförmig, wodurch ein Formschluss mit dem Schraubengewinde 11 und dem Schraubenkopf 7 auch in Längsrichtung besteht.

Das eine Kreuzprofil 12 des Metallschafts 10 ist mit dem aus Kunststoff bestehenden Schraubenkopf 7 und das andere Kreuzprofil 12 mit dem ebenfalls aus Kunststoff bestehenden Schraubengewinde 11 umspritzt. Zusätzlich zum Formschluss besteht durch das Umspritzen ein Stoffschluss zwischen dem Schraubengewinde 11 und dem Metallschaft 10 sowie dem Schraubenkopf 7 und dem Metallschaft 10.

Der Schraubenkopf 7 und das Schraubengewinde 11 stehen über Enden des Metallschafts 10 über, wobei der Überstand kurz ist und nur einen Bruchteil einer Länge des Schraubenkopfs 7 bzw. des Schraubengewindes 11 beträgt. Der Metallschaft 10, der sich über einen großen Teil der Länge des Schraubengewindes 11 bzw. des Schraubenkopfs 7 erstreckt, stützt das Schraubengewinde 11 und den Schraubenkopf 7 und verleiht ihnen Stabilität, so dass das Schraubengewinde 11 und der Schraubenkopf 7, die beide aus Kunststoff bestehen, mechanisch höher belastbar sind als ein Schraubengewinde oder ein Schraubenkopf, die vollständig aus Kunststoff bestehen und nicht von einem Metallkern gestützt werden, wie ihn die Kreuzprofile 12 des Metallschafts 10 bilden. Der Metallschaft 10 gibt der Spreizschraube 9 eine hohe Stabilität und Torsionssteifigkeit, so dass ein hohes Drehmoment vom Schraubenkopf 7 auf das Schraubengewinde 11 übertragbar ist. Die Ausbildung als Hohlprofil, im Ausführungsbeispiel als Rohr, verringert die Stabilität und Torsionssteifigkeit des Metallschafts 10 wenig, verringert aber durch die verkleinerte Querschnittsfläche die Wärmeleitfähigkeit erheblich. Das aus Kunststoff bestehende Schraubengewinde 11 und der ebenfalls aus Kunststoff bestehende Schraubenkopf 7 erhöhen eine thermische Isolierwirkung der Spreizschraube 9, so dass eine Kältebrücke über die Spreizschraube 9 vermieden wird.

Der Schraubenkopf 7 weist an seinem Ende einen Innensechskant, Innenstern (TORX) oder dgl. als Werkzeugsitz zu einem durch Formschluss drehfesten Ansetzen eines Drehwerkzeugs zu einem Drehantrieb der Spreizschraube 9 auf. Durch Einschrauben des Schraubengewindes 11 in den Spreizbereich 2 des Spreizdübels 1 wird der Spreizbereich 2 aufgespreizt, wodurch sich der Spreizdübel 1 in einem Bohrloch verankern lässt.

Eine dem Schraubengewinde 11 zugewandte Stirnfläche 14 des Schraubenkopfs 7 ist konisch oder ballig und liegt abdichtend an der Ringstufe 5, an der der Hohlschaft 4 des Spreizdübels 1 in die rohrförmige Aufnahme 6 für den Schraubenkopf 7 übergeht, an, wenn die Spreizschraube 9 in den Spreizdübel 1 eingeschraubt ist. Umlaufende Rippen 15 des Schraubenkopfs 7 liegen ebenfalls abdichtend in der rohrförmigen Aufnahme 6 des Spreizdübels 1 an, wenn sich der Schraubenkopf 7 in der Aufnahme 6 befindet. An seinem dem Schraubengewinde 11 fernen Ende weitet sich der Schraubenkopf 7 konisch auf, die konische Aufweitung ist mit der Bezugszahl 16 versehen. Sie liegt ebenfalls abdichtend in der rohrförmigen Aufnahme 6 des Spreizdübels 1 an, wenn die Spreizschraube 9 in den Spreizdübel 1 eingeschraubt ist. Für eine weitere Abdichtung sorgt ein Flansch 17 am Ende des Schraubenkopfs 7, der abdichtend in einer kongruenten Ansenkung 18 an dem dem Spreizbereich 2 fernen Ende des Spreizdübels 1 einliegt, wenn die Spreizschraube 9 in den Spreizdübel 1 eingeschraubt ist.

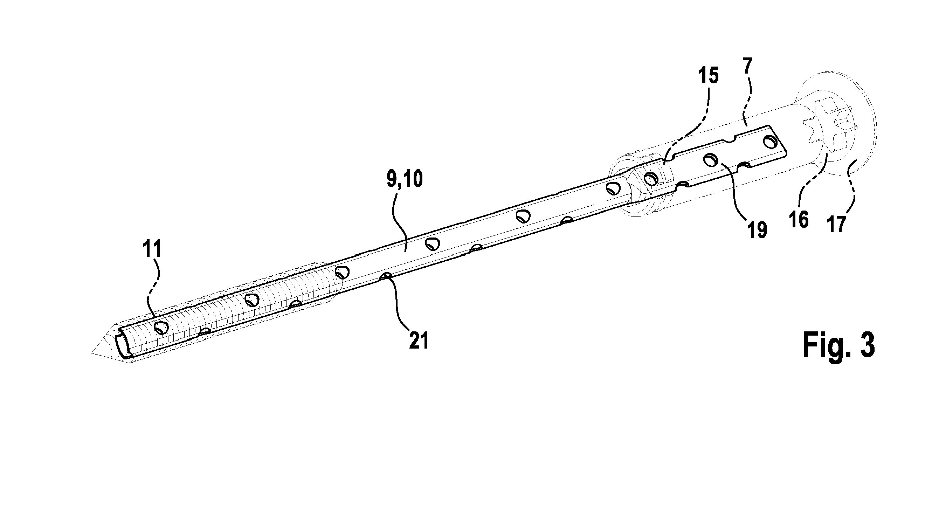

Die Figuren 3-5 zeigen Spreizschrauben 9 gemäß der Erfindung ohne den Spreizdübel 1. Übereinstimmend mit Figur 1 bestehen der Schraubenkopf 7 und das Schraubengewinde 11 der Spreizschrauben 9 aus Figuren 3-5 aus Kunststoff und sind durch Umspritzen des Metallschafts 10 hergestellt und mit dem Metallschaft 10 verbunden. Es gelten insoweit die Erläuterungen zu Figur 1 und es werden in Figuren 3-5 für gleiche Bauteile dieselben Bezugsziffern wie in Figuren 1 und 2 verwendet. Lediglich die Metallschäfte 10 der Spreizschrauben 9 sind in Figuren 3-5 anders gestaltet als in Figuren 1 und 2. Zur Vermeidung von Wiederholungen werden im Wesentlichen nur die Unterschiede erläutert.

In Figur 3 ist der Metallschaft 10 ein gelochtes Stahlrohr, dessen eines im Schraubenkopf 7 befindliches Ende 19 flachgedrückt ist. Das flachgedrückte Ende 19 bildet ein Drehsicherungsprofil, das den Schraubenkopf 7 durch Formschluss drehfest hält. Zusätzlich ist ein Stoffschluss durch das Umspritzen mit dem aus Kunststoff bestehenden Schraubenkopf 7 gegeben. Die Löcher 21 des Stahlrohrs, das den Metallschaft 10 bildet, bewirken einen Formschluss, der den Schraubenkopf 7 und das Schraubengewinde 11 in Längsrichtung mit dem Metallschaft 10 verbindet. Für das Schraubengewinde 11 bewirken die Löcher des Metallschafts 10 außerdem einen Formschluss, der das Schraubengewinde 11 drehfest auf dem Metallschaft 10 hält. Möglich ist auch ein gelochtes Stahlrohr mit einem abgeflachten Ende im Schraubengewinde 11 oder ohne abgeflachte Enden (nicht dargestellt).

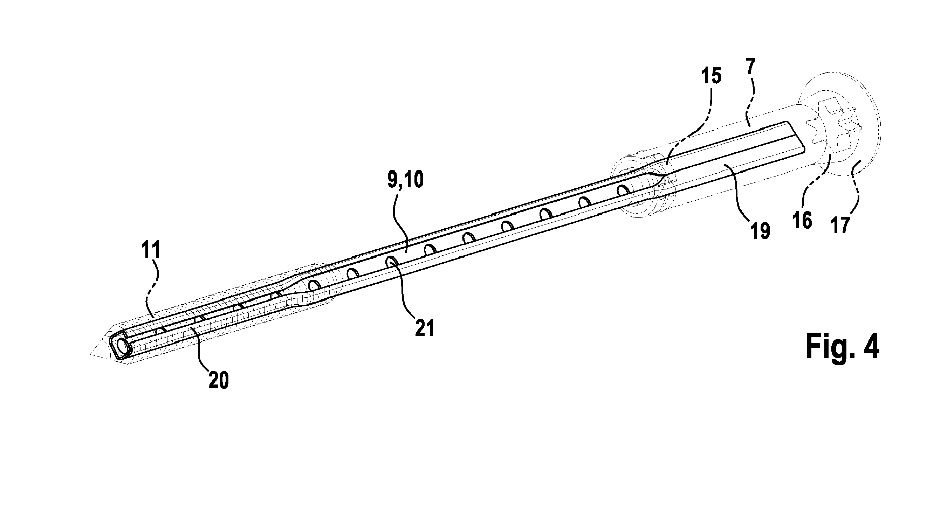

In Figur 4 besteht der Metallschaft 10 der Spreizschraube 9 aus einem Lochblechstreifen, der zu einem C-Profil gebogen ist und ein geschlitztes Rohr bildet. Wie in Figur 3 ist das Ende 19 des Metallschafts 10, das sich im Schraubenkopf 7 befindet, flachgedrückt. Das andere Ende 20 des Metallschafts 10, das sich im Schraubengewinde 11 befindet, ist verjüngt, weist also einen kleineren Querschnitt als der Metallschaft 10 zwischen den beiden Enden 19, 20 auf. Das C-Profil ist ein Hohlprofil.

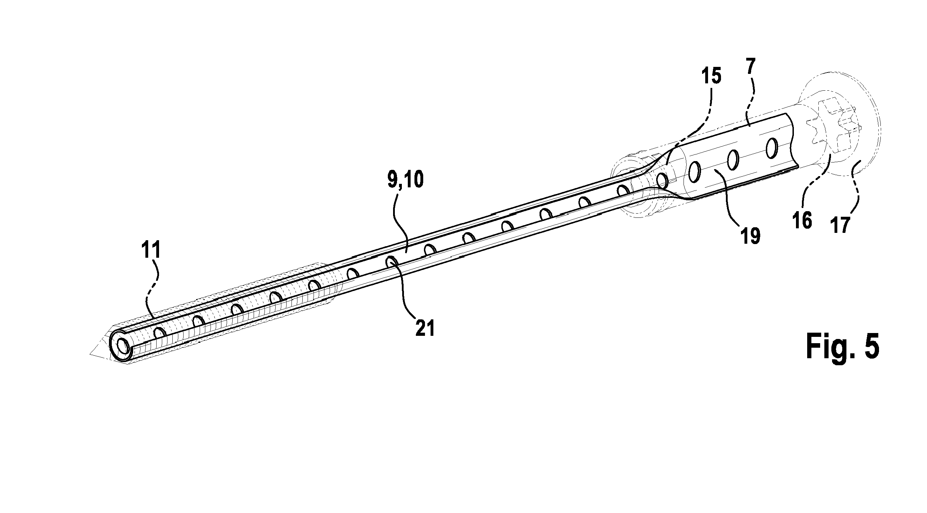

In Figur 5 besteht der Metallschaft 10 der Spreizschraube 9 ebenfalls aus einem Lochblechstreifen, der zu einem C-förmigen Profil gebogen ist. An Stelle des flachgedrückten Endes ist in Figur 5 das Ende 19 des Metallschafts 10, das sich im Schraubenkopf 7 befindet, zu einem Wellen- oder S-Profil gebogen.

Zur Herstellung der in den Figuren 3 bis 5 dargestellten Spreizschrauben 9 wird der Metallschaft 10 mit dem Schraubenkopf 7 und dem Schraubengewinde 11 aus Kunststoff umspritzt. Dabei wird an dem Ende 20, an dem das Schraubengewinde 11 angeordnet werden soll, Kunststoff in den geschlitzten, rohrartigen und in einer Spritzgussform einliegenden Metallschaft 10 eingespritzt, so dass der Kunststoff den Metallschaft 10 ausfüllt, durchfließt und das Schraubengewinde 11 und am entgegengesetzten Ende 19 den Schraubenkopf 7 ausbildet. Beim Ausfüllen des Metallschafts 10 dringt der Kunststoff in die Löcher 21 ein, so dass es zu einer formschlüssigen Verbindung zwischen dem Kunststoff und dem Metallschaft 10 kommt. Durch das Ausfüllen des rohrartigen Metallschafts 10 wird auf einfache Weise die Torsionssteifigkeit des Metallschafts 10 deutlich verbessert.

### Bezugszeichenliste

### Spreizdübel mit einer Spreizschraube

- 1: Spreizdübel
- 2: Spreizbereich
- 3: Spreizschenkel
- 4: Hohlschaft
- 5: Ringstufe
- 6: Aufnahme
- 7: Schraubenkopf
- 8: Halteteller
- 9: Spreizschraube
- 10: Metallschaft
- 11: Schraubengewinde
- 12: Kreuzprofil
- 13: Rippe
- 14: Stirnfläche
- 15: Rippe
- 16: Aufweitung
- 17: Flansch
- 18: Ansenkung
- 19: Ende
- 20: Ende
- 21: Loch

## Patentansprüche

1. Spreizdübel mit einer Spreizschraube (9), die zum Aufspreizen des Spreizdübels (1) in diesen einschraubbar ist, wobei die Spreizschraube (9) einen Schraubenkopf (7) aus Kunststoff und ein Schraubengewinde (11) aufweist, **dadurch gekennzeichnet, dass** das Schraubengewinde (11) ebenfalls aus Kunststoff besteht und dass die Spreizschraube (9) einen Metallschaft (10) aufweist, der das Schraubengewinde (11) mit dem Schraubenkopf (7) verbindet.

2. Spreizdübel nach Anspruch 1, **dadurch gekennzeichnet, dass** der Spreizdübel (1) einen Halteteller (8) an einem Ende aufweist.

3. Spreizdübel nach Anspruch 1, **dadurch gekennzeichnet, dass** der Metallschaft (10) ein Profil aufweist.

4. Spreizdübel nach Anspruch 3, **dadurch gekennzeichnet, dass** der Metallschaft ein Hohlprofil aufweist.

5. Spreizdübel nach Anspruch 4, **dadurch gekennzeichnet, dass** das Hohlprofil geschlitzt ist.

6. Spreizdübel nach Anspruch 4 oder 5, **dadurch gekennzeichnet, dass** das Hohlprofil ein gebogenes Blech ist.

7. Spreizdübel nach Anspruch 1, **dadurch gekennzeichnet, dass** das Schraubengewinde (11) und/oder der Schraubenkopf (7) durch Urformen am Metallschaft (10) angebracht ist.

8. Spreizdübel nach Anspruch 1, **dadurch gekennzeichnet, dass** der Metallschaft (10) im Bereich des Schraubengewindes (11) und/oder des Schraubenkopfs (7) ein Drehsicherungsprofil (12; 19) aufweist, das das Schraubengewinde (11) und/oder den Schraubenkopf (7) durch Formschluss drehfest hält.

9. Spreizdübel nach Anspruch 1, **dadurch gekennzeichnet, dass** der Schraubenkopf (7) den Spreizdübel (1) abdichtet, wenn die Spreizschraube (9) in den Spreizdübel (1) eingeschraubt ist.

10. Spreizdübel nach Anspruch 1, **dadurch gekennzeichnet, dass** der Spreizdübel (1) aus Kunststoff besteht, einen Spreizbereich (2) und einen Hohlschaft (4) aufweist, und dass der Hohlschaft (4) länger als der Spreizbereich (2) ist.
